# EUROPÄISCHE PATENTSCHRIFT

(11) **EP 0 893 410 B1**
(45) Veröffentlichungstag und Bekanntmachung des Hinweises auf die Patenterteilung: **06.02.2002**
(21) Anmeldenummer: 98113052.9
(22) Anmeldetag: 14.07.1998
(51) Int. Cl.: C02F 1/26

(54) **Verfahren zur Reinigung von organischen und gegebenenfalls anorganischen Schwefelverbindungen enthaltenden Abwässern**
Process for the purification of waste water containing organic and optionally inorganic sulfur compounds
Procédé de purification des eaux usées contenant des composés organiques et éventuellement inorganiques soufrés

(30) Priorität: 25.07.1997 DE 19732074
(43) Veröffentlichungstag der Anmeldung: 27.01.1999
(73) Patentinhaber: BAYER AG, 51368 Leverkusen (DE)
(72) Erfinder: Verbueken, Armand, Dr., 2970 s'Gravenwezel (BE); Sluyts, Domien, 2940 Hoevenen (BE); Verhoeven, Werner, Dr., 2920 Kalmthout (BE); Nehoda, Wilhelm, Dr., 2930 Brasschaat (BE)

(56) Entgegenhaltungen:
- EP-A- 0 224 812
- EP-A- 0 547 487
- US-A- 3 966 594
- US-A- 5 575 918

## Beschreibung

Die Erfindung betrifft ein Verfahren zur Reinigung von organischen und gegebenenfalls anorganischen Schwefelverbindungen enthaltenden Abwässern mit einem Anteil an Mercaptobenzothiazol und/oder dessen Derivate sowie gegebenenfalls einem Anteil an Benzothiazol und/oder dessen Derivate und/oder Mercaptobenzimidazol und/oder dessen Derivate und gegebenenfalls Thiosulfat.

Die Reinigung von Abwässern zur Entfernung von Nitraten durch Flüssigextraktion ist beispielsweise bekannt aus DE-A-2 350 962. Weiterhin ist bekannt, die Abtrennung von halogenierten Hydroxy-Aromaten, von Phenolen sowie von Nitrohydroxyaromaten aus wäßrigen Lösungen mittels Extraktion. Als Extraktionsmittel wird dabei ein Salz aus einem aliphatischen Amin mit einer Gesamtkohlenstoffzahl von mindestens 10 und einer starken Säure verwendet. Der Einsatz des Aminsalzes gegenüber reinem Amin hat dabei den Vorteil, daß die Extraktionswirkung wesentlich verstärkt wird. Solche Verfahren sind beispielsweise beschrieben in DE-A-3 718 725 und DE-A-3 436 349.

Weiterhin bekannt (s. EP-A-0 396 790) ist ein Verfahren zur Entfernung von Nitrat und/oder organischen Verunreinigungen aus Abwässern durch Extraktion mit Sulfaten von aliphatischen Aminen in Gegenwart von organischen Lösungsmitteln. Das zuletztgenannte Verfahren bezieht sich insbesondere zur Reinigung von Abwässern, die bei der Herstellung von Caprolactam anfallen. Die Produkte, die dabei ins Abwasser gelangen, besitzen einen großen Anteil an Verbindungen mit Ammoniumsulfonatgruppen.

Darüber hinaus ist die Aufarbeitung von Abwässern, die wasserlösliche organische Substanzen mit anionische Charakter enthalten, durch Behandlung mit aromatischen Aminen (US-A-3 966 594) bekannt. Weiterhin ist die Gewinnung niedermolekularer organischer Verbindungen aus komplexen wäßrigen Gemischen durch Extraktion mittels hochmolekularer aliphatischer Amine bekannt (Chem. Ing. Techn. 61 (1989) Nr. 10, S. 796-804). Ebenfalls bekannt ist die Rückgewinnung von aromatischen Sulfonsäuren aus wäßrigen Lösungen mittels Extraktion höherer Amine, wie Trioctylamin und Dilaurylamin, in Gegenwart von organischen Lösungsmitteln (J. Separ. Proc. Technol 6 (1985), S. 34-39).

Aus all den zuvorgenannten Veröffentlichungen ist abzuleiten, daß die Extraktion mit Hilfe von höheren Aminen oder Aminsalzen in Gegenwart von organischen Lösungsmitteln besonders dann effektiv funktioniert, wenn entweder organische Verbindungen mit sauren Gruppierungen, wie Sulfonsäuregruppen und/oder Carboxylgruppen und mit einem niedrigen pKₐ-Wert, oder organische anionische Verbindungen, wie sulfonierte aromatische Verbindungen, behandelt werden.

Aufgabe der vorliegenden Erfindung war es nun aus Abwässern, die organische und gegebenenfalls anorganische Schwefelverbindungen enthalten, diese in großem Maße daraus zu entfernen, um dadurch die biologische Abwasseraufbereitung erheblich zu verbessern. Insbesondere 2-Mercaptobenzothiazole, Benzothiazole und Mercaptobenzimidazole sind bakterientoxisch und verschlechtern die Abbauwirkung von biologischen Kläranlagen sehr stark.

Gegenstand der vorliegenden Erfindung ist daher ein Verfahren zur Reinigung von Abwässern, die Mercaptobenzothiazol und/oder dessen Derivate sowie gegebenenfalls Benzothiazol und/oder dessen Derivate und/oder Mercaptobenzimidazol und/oder dessen Derivate und Thiosulfat enthalten, das dadurch gekennzeichnet ist, daß man die Abwässer mit einem Extraktionsmittel bestehend aus Salzen aliphatischer Amine mit 8 bis 50 Kohlenstoffatomen mit einer Löslichkeit von ≤ 10 ppm in Wasser (20°C) und aliphatischen und/oder aromatischen Kohlenwasserstoffen mit einer Löslichkeit von ≤ 10 ppm in Wasser (20°C) behandelt, wobei das molare Verhältnis von eingesetzten aliphatischen Aminen zu im Abwasser insgesamt vorhandenen Schwefelverbindungen 1:10 bis 10:1 beträgt und wobei die aliphatischen Amine in Mengen von 1 bis 60 Gew.-%, bezogen auf die gesamte Menge an Extraktionsmittel, eingesetzt werden.

Abwässer, die nach dem erfindungsgemäßen Verfahren gereinigt werden können, stammen insbesondere aus der Produktion von schwefelhaltigen organischen Verbindungen, die beispielsweise als Antioxidantien oder Vulkanisationsbeschleuniger bei der Kautschukverarbeitung dienen. Insbesondere eignen sich für die erfindungsgemäße Reinigung Abwässer, die bei der Produktion von Sulfenamiden auf Basis von 2-Mercaptobenzothiazolen, von 2-Mercaptobenzothiazolen und seiner Derivate, wie Disulfide und Zn-Salze, und von Mercaptobenzimidazolen und seiner Derivate anfallen.

Die Abwässer, die nach dem erfindungsgemäßen Verfahren gereinigt werden können, enthalten die organischen und gegebenenfalls anorganischen Schwefelverbindungen in Mengen von 10 bis 6.000 ppm, insbesondere 1.000 bis 3.500 ppm. Als organische und anorganische Schwefelverbindungen werden hierbei insbesondere genannt: Mercaptobenzothiazol und dessen Derivate, Benzothiazol und dessen Derivate, Mercaptobenzimidazol und dessen Derivate sowie Thiosulfat.

Der Anteil an Mercaptobenzothioazol und/oder dessen Derivate, wie den Sulfinaten und entsprechenden Hydroxylverbindungen, beträgt im allgemeinen 200 bis 2 000 ppm.

Der Anteil an Benzothiazol und/oder dessen Derivate, wie den Sulfinaten und entsprechenden Hydroxyverbindungen, beträgt im allgemeinen 100 bis 2 000 ppm.

Der Anteil an Mercaptobenzimidazol und/oder dessen Derivate, wie den Sulfinaten und den entsprechenden Hydroxy- und Alkylverbindungen, beträgt ca. 10 bis 2 000 ppm.

Neben dem Mercaptobenzothiazol, dem Benzothiazol und dem Mercaptobenzimidazol sind, wie oben erwähnt, auch zu einem gewissen Anteil noch deren Derivate, wie die entsprechenden Sulfinate und Hydroxyverbindungen, vorhanden. Diese Derivate entstehen bei der Herstellung der obengenannten Kautschukhilfsmittel. Der Anteil der Derivate kann bis zu 1.000 Gew.-%, bezogen auf die gesamte Menge an Mercaptobenzothiazol oder Benzothiazol oder Mercaptobenzimidazol, betragen.

Die gegebenenfalls noch in den Abwässern anwesenden anorganischen Schwefelverbindungen, wie Thiosulfat, können in Mengen bis zu 50 Gew.-%, bezogen auf die Gesamtmenge an organischen Schwefelverbindungen, in den Abwässern enthalten sein.

Nach dem erfindungsgemäßen Verfahren werden die oben beschriebenen Abwässer mit einem Extraktionsmittel bestehend aus Salzen, bevorzugt den Sulfaten und Chloriden, aliphatischer Amine mit bevorzugt 18 bis 36 Kohlenstoffatomen behandelt. Als aliphatische Amine werden dabei insbesondere die tertiären aliphatischen Amine eingesetzt, wie Tri-n-octylamin, Tri-isooctylamin, Tri-n-decylamin, Tri-isodecylamin, Tri-n-dodecylamin, Tri-isododecylamin oder deren Gemische.

Die Löslichkeit der eingesetzten aliphatischen Amine beträgt dabei bevorzugt unter 5 ppm, insbesondere unter 1 ppm in Wasser (20°C).

Neben den Salzen aliphatischer Amine werden bei der Extraktion noch aliphatische und/oder aromatische Kohlenwasserstoffe mit einer Löslichkeit von bevorzugt ≤ 5 ppm, insbesondere ≤ 1 ppm in Wasser (20°C) eingesetzt. Als aliphatische und/oder aromatische Kohlenwasserstoffe kommen insbesondere in Frage: Dodecan und Kerosine, wie z.B. Gemische aus > 99,5% aromatischer Kohlenwasserstoffen mit einem Siedebereich von 186°C bis 214°C und einem Flammpunkt ≥ 65°C.

Das molare Verhältnis von eingesetzten aliphatischen Amine zu den im Abwasser vorhandenen Schwefelverbindungen beträgt bevorzugt 1:5 bis 5:1, insbesondere 1:1 bis 3:1.

Die aliphatischen Amine werden bevorzugt in Mengen von 5 bis 40, insbesondere 10 bis 30 Gew.-%, bezogen auf die gesamte Menge an Extraktionsmittel, eingesetzt.

Das erfindungsgemäße Reinigungsverfahren kann sowohl diskontinuierlich als auch kontinuierlich durchgeführt werden.

Das erfindungsgemäße Verfahren wird üblicherweise bei Normaldruck durchgeführt. Selbstverständlich ist es auch möglich das erfindungsgemäße Verfahren bei leicht erhöhten oder leicht verminderten Druck durchzuführen.

Die Temperaturen bei dem erfindungsgemäßen Reinigungsverfahren betragen im allgemeinen 20 bis 80°C, bevorzugt 30 bis 60°C.

Ein weiterer Gegenstand des erfindungsgemäßen Verfahrens ist die Aufarbeitung des bei der Reinigung erhaltenen Extraktionsmittels. Die Aufarbeitung ist dadurch gekennzeichnet, daß man das die Schwefelverbindungen enthaltende Extraktionsmittel mit einer wäßrigen, anorganischen Base behandelt, anschließend die die Schwefelverbindungen nunmehr enthaltende wäßrige Phase nach Behandlung mit anorganischen Säuren gegebenenfalls zur Gewinnung von Schwefel oder Schwefelverbindungen aufarbeitet und die aus dem Extraktionsmittel bestehende organische Phase in das Reinigungsverfahren zurückführt oder - im Falle von in den Abwässern zusätzlich vorhandenem Benzothiazol - die nach der Behandlung mit Basen aus dem Extraktionsmittel und aus Benzothiazol bestehende organische Phase mit mindestens 10 gew.-%iger Schwefelsäure behandelt, anschließend das Benzothiazol zusammen mit der wäßrigen Schwefelsäure zur Aufarbeitung abführt und das von dem Benzothiazol zum Teil befreite Extraktionsmittel in das Reinigungsverfahren zurückführt, wobei das rückgeführte Extraktionsmittel einen Restgehalt an Benzothiazol von 15 Gew.-% nicht überschreitet.

Das Extraktionsmittel, das nunmehr die organischen, gegebenenfalls anorganischen Schwefelverbindungen enthält, wird anschließend mit einer wäßrigen, anorganischen Base behandelt. Als anorganische Basen können die üblichen Alkali- und Erdalkalimetallhydroxide und -Oxide sowie Ammoniak, bevorzugt Natronlauge, eingesetzt werden. Die anorganischen Basen können einzeln oder im Gemisch untereinander eingesetzt werden. Die Konzentration der anorganischen Basen in Wasser beträgt üblicherweise 5 bis 50 Gew.-%, bevorzugt 10 bis 20 Gew.-%. Die Menge an wäßrigen, anorganischen Basen beträgt üblicherweise 5 bis 20 Gew.-%, bezogen auf das Extraktionsmittel.

Nach der Behandlung des die organischen, gegebenenfalls anorganischen Schwefelverbindungen enthaltende Extraktionsmittel mit wäßrigen, anorganischen Basen wird die dabei erhaltene wäßrige Phase, die nunmehr die organischen, gegebenenfalls anorganischen Schwefelverbindungen enthält, zur Gewinnung von Schwefel oder Schwefelverbindungen mit anorganischen Säuren, wie Schwefelsäure, aufgearbeitet. Beim Ansäuern mit anorganischen Säuren fallen dabei die organischen, gegebenenfalls anorganischen Schwefelverbindungen in Form eines Harzes aus, das wie erwähnt zu Schwefel oder Schwefelverbindungen aufgearbeitet werden kann.

Die erhaltene, organische Phase, bestehend im wesentlichen aus dem oben beschriebenen Extraktionsmittel, kann wieder in das Reinigungsverfahren zurückgeführt werden.

Falls in den Abwässern zusätzlich Benzothiazol vorhanden ist, wird die nach der Behandlung mit wäßrigen, anorganischen Basen aus dem Extraktionsmittel und aus Benzothiazol bestehende organische Phase mit mindestens 10 gew.%iger Schwefelsäure, bevorzugt mit mindestens 20 gew.-%iger Schwefelsäure, insbesondere mit mindestens 30 gew.-%iger Schwefelsäure behandelt. Die Menge an Schwefelsäure beträgt dabei bevorzugt 10 bis 80 Gew.-%, bezogen auf die organische Phase.

Anschließend wird das Benzothiazol zusammen mit der wäßrigen Schwefelsäure zur Aufarbeitung abgeführt und das von dem Benzothiazol zum Teil befreite Extraktionsmittel in das Reinigungsverfahren zurückgeführt. Bei der Aufarbeitung des rückgeführten Extraktionsmittels ist darauf zu achten, daß das rückgeführte Extraktionsmittel einen Restgehalt an Benzothiazol von bevorzugt 10 Gew.-%, insbesondere 5 Gew.-%, nicht überschreitet. Das bedeutet mit anderen Worten, daß der Gehalt an Benzothiazol im Extraktionsmittel einen vorgegebenen Wert nicht überschreitet.

Das erfindungsgemäße Reinigungsverfahren kann in den üblichen Apparaturen, wie Extraktionskolonnen oder Mischer-Scheider-Einheiten, durchgeführt werden.

Das erfindungsgemäße Verfahren zeichnet sich insbesondere dadurch aus, daß die organischen, gegebenenfalls anorganischen Schwefelverbindungen aus den Abwässern zu einem überraschend hohen Anteil entfernt werden können. Der Anteil kann dabei bis zu 100 % betragen. Weiterhin ist für das erfindungsgemäße Verfahren von Bedeutung, daß die organischen, gegebenenfalls anorganischen Schwefelverbindungen trotz der Gegenwart von anorganischen Salzen, wie Sulfaten oder Chloriden, in so hohem Maße abgetrennt werden können. Dadurch gestaltet sich das erfindungsgemäße Verfahren besonders ökonomisch.

Aufgrund des zuvor beschriebenen Standes der Technik war es überraschend, daß bei dem erfindungsgemäßen Verfahren die Mercaptobenzothiazole, Benzothiazole und Mercaptobenzimidazole, wie erwähnt, praktisch quantitativ abgetrennt werden können, obwohl diese Verbindungen keine Säuregruppierungen enthalten und einen pKₐ-Wert von über 7 besitzen. Es mußte nämlich erwartet werden, daß nur solche organische Verbindungen sich besonders mit Hilfe von aminischen Verbindungen extrahieren lassen, die einen besonders niedrigen pKₐ-Wert besitzen und einen anionischen Charakter haben.

### Beispiele

### Beispiel 1

1.000 ml eines Abwassers aus der Produktion von Vulkanisationsbeschleuniger mit einem pH-Wert von 3,4 wurde einmal mit 100 ml Extraktionsmittel bestehend aus 10 Gew.-% Tri-n-octylamin und 90 Gew.-% Kerosin behandelt. Das Amin wurde vorher mit Schwefelsäure zum Aminsulfatsalz umgesetzt. Das eingesetzte Abwasser enthielt 375 mg/l 2-Mercaptobenzothiazol (MBT), 310 mg/l Benzothiazol (BT) und 2125 mg/l deren Derivate. Das molare Verhältnis von eingesetztem Amin zu im Abwasser vorhandenen Schwefelverbindungen betrug 2:1. Nach der Phasentrennung enthielt die extrahierte wäßrige Phase noch < 5 mg/l MBT, 18 mg/l BT und 800 mg/l an Derivaten. Das entspricht einem Extraktionsgrad von fast 100 % für 2-Mercaptobenzothiazol und 94 % für Benzothiazol.

### Beispiel 2

In einer 2-stufigen Mischer-Scheider-Extraktionsanlage wurden 5 l/h eines Abwassers aus der Produktion von Kautschukhilfsmitteln kontinuierlich und im Gegenstrom extrahiert mit einem Extraktionsmittel bestehend aus 10 Gew.-% Tri-n-octylamin und 90 Gew.-% Kerosin, wobei das molare Verhältnis von eingesetztem Amin zu im Abwasser vorhandenen Schwefelverbindungen 2:1 betrug. Das Amin wurde vorher mit Schwefelsäure in das Aminsulfatsalz überführt. Das eingesetzte Abwasser enthielt 260 mg/l 2-Mercaptobenzothiazol (MBT), 215 mg/l Benzothiazol (BT), 220 mg/l 2-Mercapto-methylbenzimidazol (MB2) und 1885 mg/l deren Derivate. Das extrahierte Abwasser enthielt noch < 10 mg/l MBT, < 10 mg/l BT, < 10 mg/l MB2 und 400 mg/l an Derivaten. Das entspricht einer vollständigen Extraktion von 2-Mercaptobenzothiazol, Benzothiazol und 2-Mercapto-methylbenzimidazol.

### Beispiel 3

In einer 2-stufigen Mischer-Scheider Extraktionsanlage wurden 85 kg/h eines Abwassers aus der Produktion von Kautschukhilfsmittel kontinuierlich und im Gegenstrom extrahiert mit 4,5 kg/h eines Extraktionsmittels bestehend aus 20 Gew.-% Triiso-octylamin und 80 Gew.-% Kerosin, wobei das Amin durch Zugabe von Schwefelsäure (50 Gew.-%) in das Aminsulfatsalz umgesetzt wurde. Das eingesetzte Abwasser enthielt neben 3 Gew.-% NaCl, 3 Gew.-% Na₂SO₄ und 140 mg/l Restmengen von in der Produktion eingesetzten Aminen, 400 mg/l 2-Mercaptobenzothiazol, 300 mg/l Benzothiazol, 40 mg/l 2-Mercapto-methylbenzimidazol, 500 mg/l Thiosulfat und 1550 mg/l an Derivaten.

Das extrahierte Abwasser enthielt noch < 5mg/l 2-Mercaptobenzothiazol, 30 mg/l Benzothiazol, < 5 mg/l 2-Mercapto-methylbenzimidazol, 25 mg/l Thiosulfat und 280 mg/l an Derivaten. Die restlichen Amine wurden nicht extrahiert. Die Salzfracht blieb fast unverändert: 2,8 Gew.-% NaCl und 3,2 Gew.-% Na₂SO₄.

Das die Schwefelverbindungen enthaltende Extraktionsmittel (4,6 kg/h) wurde anschließend in einer Re-Extraktionsstufe bestehend aus einer Mischer-Scheider-Einheit behandelt mit 0,5 kg/h 18-gew.-%iger Natronlauge. Die die Schwefelverbindungen nunmehr enthaltende wäßrige Phase wurde nach Ansäuern mit Schwefelsäure in ein Harz umgesetzt und weiter zur Gewinnung von Schwefel aufgearbeitet.

Die nach der Behandlung mit Base aus dem Extraktionsmittel und aus 2,9 Gew.-% Benzothiazol bestehende organische Phase wurde in einer separaten Mischer-Scheider-Einheit mit im Kreis laufender 32 gew.-%iger Schwefelsäure (3,7 kg/h) behandelt. Dazu wurde kontinuierlich 0,5 kg/h 50 gew.-%ige Schwefelsäure zugegeben.

Das dadurch von dem Benzothiazol zum Teil befreite Extraktionsmittel (4,5 kg/h) wurde in das Reinigungsverfahren, wie oben erwähnt, zurückgeführt.

## Patentansprüche

1. Verfahren zur Reinigung von Abwässern, die Mercaptobenzothiazol sowie gegebenenfalls Thiosulfat, Benzothiazol, Mercaptobenzimidazol und/oder deren Derivate enthalten, **dadurch gekennzeichnet, daß** man die Abwässer mit einem Extraktionsmittel bestehend aus Salzen aliphatischer Amine mit 8 bis 50 Kohlenstoffatomen mit einer Löslichkeit von ≤ 10 ppm in Wasser (20°C) und aliphatischen und/oder aromatischen Kohlenwasserstoffen mit einer Löslichkeit vom ≤ 10 ppm in Wasser (20°C) behandelt, wobei das molare Verhältnis von eingesetzten aliphatischen Aminen zu im Abwasser insgesamt vorhandenen Schwefelverbindungen 1:10 bis 10:1 beträgt und wobei die aliphatischen Amine in Mengen von 1 bis 60 Gew.-%, bezogen auf die gesamte Menge an Extraktionsmittel, eingesetzt werden.

2. Verfahren nach Anspruch 1, **dadurch gekennzeichnet, daß** man das die Schwefelverbindungen enthaltende Extraktionsmittel mit einer wäßrigen, anorganischen Base behandelt, anschließend die die Schwefelverbindungen nunmehr enthaltende wäßrige Phase nach Behandlung mit anorganischen Säuren gegebenenfalls zur Gewinnung von Schwefel oder Schwefelverbindungen aufarbeitet und die aus dem Extraktionsmittel bestehende organische Phase in das Reinigungsverfahren zurückführt oder - im Falle von in den Abwässern zusätzlich vorhandenem Benzothiazol - die nach der Behandlung mit Basen aus dem Extraktionsmittel und aus Benzothiazol bestehende organische Phase mit mindestens 10 gew.-%iger Schwefelsäure behandelt, anschließend das Benzothiazol zusammen mit der wäßrigen Schwefelsäure zur Aufarbeitung abführt und das von dem Benzothiazol zum Teil befreite Extraktionsmittel in das Reinigungsverfahren zurückführt, wobei das rückgeführte Extraktionsmittel einen Restgehalt an Benzothiazol von 15 Gew.-% nicht überschreitet.

## Claims

1. A process for the purification of waste waters which contain mercaptobenzo-thiazole and, should the situation arise, thiosulfate, benzothiazole, mercaptobenzimidazole and/or derivatives thereof, **characterised in that** the waste waters are treated with an extracting agent comprising salts of aliphatic amines having 8 to 50 carbon atoms and having a solubility of ≤ 10 ppm in water (20°C) and aliphatic and/or aromatic hydrocarbons having a solubility of ≤ 10 ppm in water (20°C), the molar ratio of aliphatic amines used to total sulfur compounds present in the waste water being from 1:10 to 10:1 and the aliphatic amines being used in quantities of from 1 to 60 wt.%, based on the total quantity of extracting agent.

2. A process according to claim 1, **characterised in that** the extracting agent containing the sulfur compounds is treated with an aqueous, inorganic base, then the aqueous phase now containing the sulfur compounds, after treatment with inorganic acids, is optionally worked up in order to recover sulfur or sulfur compounds and the organic phase, which consists of the extracting agent, is returned to the purification process or - if benzothiazole is additionally present in the waste waters - the organic phase, which after the treatment with bases consists of the extracting agent and of benzothiazole, is treated with at least 10 wt.% sulfuric acid, then the benzothiazole together with the aqueous sulfuric acid are led away for working up and the extracting agent partly freed from the benzothiazole is returned to the purification process and the returned extracting agent does not exceed a residual benzothiazole content of 15 wt.%.

## Revendications

1. Procédé de purification d'eaux usées qui contiennent le mercaptobenzothiazole ainsi que le cas échéant, le thiosulfate, le benzothiazole, le mercaptobenzimidazole et/ou leurs dérivés, **caractérisé en ce que** l'on traite les eaux usées avec un agent d'extraction consistant en des sels d'amines aliphatiques ayant 8 à 50 atomes de carbone avec une solubilité ≤ 10 ppm dans l'eau (20°C) et des hydrocarbures aliphatiques et/ou aromatiques avec une solubilité ≤ 10 ppm dans l'eau (20°C), où le rapport molaire des amines aliphatiques mises en oeuvre aux composés soufrés présents au total dans les eaux usées se situe dans l'intervalle allant de 1:10 à 10:1 et où les amines aliphatiques sont mises en oeuvre en des quantités allant de 1 à 60% en poids, sur base de la quantité totale de l'agent d'extraction.

2. Procédé suivant la revendication 1, **caractérisé en ce que** l'on traite l'agent d'extraction contenant les composés soufrés avec une base inorganique aqueuse, ensuite la phase aqueuse qui contient à présent les composés soufrés est traitée avec un acide organique éventuellement pour obtenir le soufre et les composés soufrés et la phase organique consistant en l'agent d'extraction est recyclée dans le procédé de purification, ou dans le cas où du benzothiazole est également présent dans les eaux usées, la phase organique consistant, après le traitement avec une base, en l'agent d'extraction et en le benzothiazole, est traitée avec de l'acide sulfurique à au moins 10% en poids, ensuite le benzothiazole est éliminé avec l'acide sulfurique aqueux, pour traitement, et l'agent d'extraction partiellement libéré du benzothiazole est recyclé dans le procédé de purification, où l'agent d'extraction recyclé ne présente pas une teneur résiduelle en benzothiadiazole dépassant 15% en poids.
